**Europäisches Patentamt**

**European Patent Office**

**Office européen des brevets**

(19)

(11) Veröffentlichungsnummer: **0 049 419**

**A1**

(12) # EUROPÄISCHE PATENTANMELDUNG

(21) Anmeldenummer: **81107539.9**

(22) Anmeldetag: **22.09.81**

(51) Int. Cl.³: **G 01 S 17/46**
**G 01 B 11/02**

(30) Priorität: **30.09.80 DE 3036886**

(43) Veröffentlichungstag der Anmeldung:
**14.04.82 Patentblatt 82/15**

(84) Benannte Vertragsstaaten:
**BE FR GB IT NL SE**

(71) Anmelder: **SIEMENS AKTIENGESELLSCHAFT Berlin
und München
Postfach 22 02 61
D-8000 München 22(DE)**

(72) Erfinder: **Bodlaj, Viktor, Dr.-Ing.
Werinherstrasse 69
D-8000 München 90(DE)**

(54) Verfahren zum Korrigieren eines Messsignals.

(57) Es wird ein Verfahren zum Korrigieren eines Meßsignals beschrieben, das von einem berührungslos messendem Gerät erzeugt worden ist, welches eine zu vermessende Oberfläche mit einem Lichtstrahl abtastet, das von der Oberfläche zurückgestrahlte Licht mittels einer optuelektrischen Detektoreinrichtung mißt, und das Meßsignal in Abhängigkeit von einem oder mehreren vom Detektor abgegebenen elektrischen Signalen erzeugt. Bei einem vorstehend beschriebenen Gerät können beispielsweise durch ungleichmäßiges Streuvermögen der zu vermessenden Oberfläche hervorgerufene Verzerrungen des vom Detektor abgegebenen elektrischen Signals auftreten, die zu Meßfehlern führen. Solche Meßfehler sollen auf einfachste Weise korrigiert werden. Dazu wird so vorgegangen, daß das Meßsignal in Abhängigkeit von einer Verzerrung eines elektrischen Signals korrigiert wird.

FIG 7

EP 0 049 419 A1

SIEMENS AKTIENGESELLSCHAFT
Berlin und München

Unser Zeichen
VPA

− 1 −

80 P 7 1 7 9 E

## Verfahren zum Korrigieren eines Meßsignals

Die vorliegende Erfindung bezieht sich auf ein Verfahren zum Korrigieren eines Meßsignals nach dem Oberbegriff des Patentanspruchs 1.

Bei einem bekannten Gerät der eingangs genannten Art tastet ein in einer Ebene hin- und herbewegter, scharf gebündelter Lichtstrahl, vorzugsweise ein Laserstrahl, eine Oberfläche eines Objekts ab. Eine optoelektrische Detektoreinrichtung mit einer scharf gebündelten Empfangscharakteristik entlang einer Visierlinie ist so angeordnet, daß die Visierlinie in der besagten Ebene liegt und die Oberfläche des Objekts an einer Stelle trifft, die auch von dem hin- und herbewegten, scharf gebündelten Lichtstrahl getroffen wird. Die Detektoreinrichtung empfängt somit im wesentlichen nur Licht, das von der Oberfläche in Richtung der Visierlinie gestreut wird und auch nur dann, wenn der scharf gebündelte Lichtstrahl die besagte Stelle trifft.

Die Detektoreinrichtung mißt die Gesamtintensität des empfangenen Lichts. Das resultierende Meßsignal ergibt sich dabei aus der Faltung der in der Auftreffstelle des scharf gebündelten Lichtstrahls auf der Oberfläche des Objekts gegebenen Intensitätsverteilung mit der Blenden- oder Spaltfunktion der Detektoreinrichtung in der Zeit. Anschaulich bedeutet dies, daß der in Richtung der Visierlinie abstrahlende und in der Auftreffstelle des Lichtstrahls auf der Oberfläche des Objekts vorhandene Lichtfleck mit der Zeit in die Blendenöffnung hineinwandert, so daß immer mehr Licht durch die Blendenöffnung hindurchtritt, bis ein maximaler Wert erreicht wird und dann der Lichtfleck mit der Zeit wieder aus

Ed 1 Sti/19.8.80

der Blendenöffnung herauswandert. Ist die lokale Intensität in diesem Lichtfleck während der Durchwanderungszeit konstant, so gibt die Detektoreinrichtung ein Signal ab, welches unter gewissen Bedingungen einen symmetrischen zeitlichen Verlauf in Form einer Glockenfunktion aufweist. Beispielsweise ist dies der Fall, wenn die Blendenöffnung ein rechteckförmiger Spalt ist, der senkrecht zur Längsrichtung des Spaltes von einem kreisförmigen Lichtfleck mit überall gleicher Intensität überstrichen wird.

Bei der bekannten Einrichtung basiert die Messung auf dem besagten zeitlich symmetrischen Verlauf des von der Detektoreinrichtung gelieferten Meßsignals.

Wenn daher der zeitlich symmetrische Verlauf des von der Detektoreinrichtung gelieferten elektrischen Signals nicht mehr gegeben ist, treten bei dieser Einrichtung Meßfehler auf. Der zeitlich symmetrische Verlauf des elektrischen Signals ist beispielsweise dann nicht mehr gewährleistet, wenn die Intensität des von der Oberfläche des Objekts gestreuten Lichts sich lokal ändert.

Es ist die Aufgabe der vorliegenden Erfindung ein Verfahren zu schaffen, welches es gestattet, einen auf einer Verzerrung des von der Detektoreinrichtung abgegebenen elektrischen Signals beruhenden Meßfehler auf einfachste Weise zu korrigieren.

Diese Aufgabe wird nach dem kennzeichnenden Teil des Patentanspruchs 1 dadurch gelöst, daß das Meßsignal in Abhängigkeit von einer Verzerrung des elektrischen Signals korrigiert wird.

Diese überraschend einfache Lösung bietet eine Reihe von erheblichen Vorteilen.

Die Korrektur des Meßsignals kann rein elektronisch erfolgen, die Einrichtung zum berührungslosen Messen selbst braucht nicht geändert zu werden. Da die Fehlerkorrektur allein auf die Elektronik verlegt worden ist, können alle Vorzüge elektronischer Recheneinrichtungen, insbesondere die Errungenschaften der integrierten Mikroelektronik, wie sie beispielsweise durch die vollintegrierten Mikroprozessorbausteine verkörpert sind, ausgenutzt werden. Die Korrektur kann beliebig genau, notfalls über komplizierte Näherungsverfahren, durchgeführt werden. Die heutigen Rechnergeschwindigkeiten erlauben dabei eine äußerst schnelle Korrektur, welche die bisherigen Meßgeschwindigkeiten kaum beeinträchtigt.

Bevorzugterweise wird nach Anspruch 2 das Meßsignal mit einem gesondert erzeugten, von der Verzerrung des elektrischen Signals abhängigen Korrektursignal korrigiert.

Vielfach ist es zweckmäßig, wenn, wie im Anspruch 3 angegeben, die Verzerrung des elektrischen Signals durch Differenzieren des Signals und durch Vergleich bestimmter vorhandener Impulse im differenzierten Signal festgestellt wird. Eine derartige Aufbereitung des verzerrten Signals vereinfacht in vielen Fällen, insbesondere bei Verzerrungen durch ortsabhängiges Streuverhalten, die elektronische Weiterverarbeitung und reicht dabei auch für die meist gestellten Genauigkeitsansprüche aus.

Im Fall eines ortsabhängigen Streuvermögens, aber auch in vielen anderen Fällen reicht es dabei meist aus, wenn wie im Anspruch 4 angegeben, die Verzerrung durch Vergleich der Impulsbreiten der bestimmten Impulse festgestellt wird.

-4-     VPA 80 P 7179 E

Es ist dabei, insbesondere bei ortsabhängigem Streuvermögen, ausreichend, wenn, wie im Anspruch 5 angegeben, das Korrektursignal in Abhängigkeit von einer
Differenz der Impulsbreiten zweier bestimmter Impulse
des differenzierten elektrischen Signals gebildet wird.

Bei einer bekannten berührungslos messenden Einrichtung
der eingangs genannten Art wird ein Meßsignal in Abhängigkeit vom zeitlichen Abstand zwischen zwei aufeinander folgenden elektrischen Signalen gebildet.
Insbesondere in einem solchen Fall ist es besonders
zweckmäßig, wenn, wie im Anspruch 6 angegeben, zur
Korrektur des Meßsignals die Zeitdifferenz korrigiert
wird, indem die Differenz der Impulsbreiten der beiden
bestimmten Impulse des differenzierten elektrischen Signals zu dieser Zeitdifferenz hinzugegeben wird.

Die Erfindung wird am Beispiel eines bekannten berührungslos messenden Geräts anhand der Figuren in der
nun folgenden Beschreibung näher erläutert. Von den
Figuren zeigen:

Figur 1 in schematischer Darstellung das bekannte
         berührungslos messende Gerät,

Figur 2 Impulsdiagramme I - III,welche vom Detektor
         des Geräts abgegebene elektrische Signale über
         der Zeit t und deren Verarbeitung veranschaulichen, wobei vorausgesetzt ist, daß die Oberfläche des zu vermessenden Objekts gleichmäßiges Streuvermögen aufweist und dadurch
         die elektrischen Signale unverzerrt sind,

Figuren 3 und 4 in Diagrammen I'- III' bzw. I'' - III''
         Impulsdiagramme ähnlich denen der Figur 1,
         wobei Signalverzerrungen angenommen sind, wie
         sie durch ein ungleichmäßiges Streuvermögen der zu vermessenden Oberfläche hervorgerufen werden können,

Figuren 5 und 6 Impulsdiagramme V - VI bzw. V' - VI', welche jeweils die vom Detektor des Geräts abgegebenen elektrischen Signale über der Zeit t und daraus abgeleitete differenzierte Signale und zu Rechteckimpulsen verformte differenzierte Signale zeigen, wobei in Figur 5 angenommen ist, daß die elektrischen Signale unverzerrt sind, während in der Figur 6 eine Verzerrung angenommen ist, wie sie aus der Figur 2 hervorgeht, und

Figur 7 ein Blockschaltbild einer elektronischen Schaltung, mit welcher sich aus verzerrten Signalen Korrektursignale, bzw. ein korrigiertes Meßsignal erzeugen läßt.

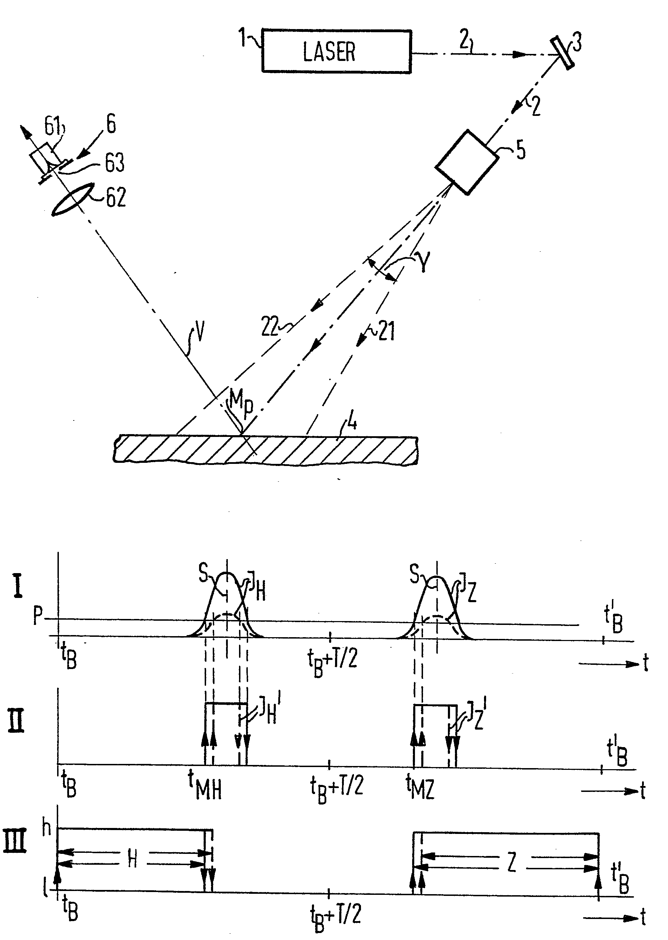

Bei dem in Figur 1 dargestellten Gerät wird von einem Laser 1 ein scharf gebündelter Laserstrahl 2 ausgesandt, der durch einen Umlenkspiegel 3 in Richtung einer zu vermessenden Oberfläche 4 eines Objekts umgelenkt wird. Im Strahlengang des umgelenkten Laserstrahls 2 ist ein Lichtstrahlablenker 5 angeordnet, der den Laserstrahl 2 in der Zeichenebene zwischen zwei Grenzrichtungen 21 und 22, die einen Winkel $\gamma$ einschließen, hin- und herbewegt. Eine optoelektrische Detektoreinrichtung mit einer scharf gebündelten Empfangscharakteristik entlang einer Visierlinie V ist so angeordnet, daß die Visierlinie V ebenfalls in der Zeichenebene verläuft und den vom abgelenkten Laserstrahl 2 überstrichenen Bereich der Oberfläche 4 trifft. Diese Detektoreinrichtung 6 ist mit einem Fotodetektor 61 aufgebaut, dessen Detektorfenster einen schmalen Spalt bildet. Vor dem Detektorfenster ist eine Abbildungsoptik 62 angeordnet, welche die Stelle der Oberfläche 4, die von der Visierlinie V durchstoßen wird, reell auf die Ebene abbildet, in welcher sich das Detektorfenster 63 befindet.

Bei dem in der Figur 1 dargestellten Gerät wird periodisch ein bestimmter Anfangszeitpunkt gemessen, in welchem der abgelenkte Laserstrahl 2 eine bestimmte Richtung, beispielsweise die Richtung 21, einnimmt, Diese bestimmte Richtung entspricht einer bestimmten Phase des periodischen Ablenkvorgangs. Von der Richtung 21 bewegt sich der abgelenkte Laserstrahl 2 nach links, bis er die Richtung 22 einnimmt, kehrt dort um und bewegt sich wieder nach rechts, bis er wieder die Richtung 21 eingenommen hat. Von hier aus beginnt der beschriebene Ablenkvorgang von neuem. Jedesmal, wenn der abgelenkte Laserstrahl 2 die Visierlinie V auf der Oberfläche 4 trifft, gibt der Fotodetektor 61 ein Signal ab. Mittels einer Uhr wird die Dauer H zwischen der Anfangszeit $t_B$ und dem Zeitpunkt $t_{MH}$, bei dem der Detektor 61 ein erstes Mal ein Signal abgibt, gemessen, und dann die Dauer Z zwischen einem Zeitpunkt $t_{MZ}$, bei dem in derselben Periode der Detektor 61 ein zweites Mal ein Signal abgibt und dem darauffolgenden Anfangszeitpunkt $t'_B$. Aus diesen gemessenen Dauern läßt sich rechnerisch der Abstand desjenigen Punktes auf der Oberfläche 4 von einer vorgebbaren Bezugsebene bestimmen, in welchem die Visierlinie V die Oberfläche 4 durchstößt. Dieser Punkt ist mit $M_p$ bezeichnet.

In der Figur 2 ist dargestellt, wie bei dem in Figur 1 dargestellten Gerät die maßgebenden Dauern H und Z in einer Ablenkperiode $t_B' - t_B = T$ ermittelt werden.

Der abgelenkte Laserstrahl 2 nimmt zum gemessenen Zeitpunkt $t_B$ die Richtung 21 in Figur 1 ein. Der von diesem abgelenkten Laserstrahl 2 auf der Fläche 4 erzeugte
Lichtfleck bewegt sich in der Figur 1 nach links, bis
er in die Nähe des Punktes $M_D$ gelangt. Dieser Punkt
liegt in dem von der Optik 62 auf die Fläche 4 abgebildeten spaltförmigen Detektorfenster. Durch die
Faltung der Intensitätsverteilung im Lichtfleck und
der Spaltfunktion des Detektorfensters gibt der Detektor unter gewissen Voraussetzungen ein elektrisches
Signal $J_H$ in Form einer symmetrischen Glockenkurve ab.
Wie früher schon erwähnt, ist dies beispielsweise der
Fall, wenn der Lichtfleck ein Kreis ist, in dem gleichmäßige Intensität herrscht.

Der Lichtfleck auf der Fläche 4 wandert, nachdem er
das Bild des Detektorfensters überquert hat, von diesem
fort, bis der Laserstrahl 2 in die Richtung 22 zeigt.
Bei dem in der Figur 1 dargestellten Gerät erreicht er
diese Stellung zum Zeitpunkt $t_B + T/2$. Der Lichtfleck
wandert ab diesem Zeitpunkt wieder zurück und überstreicht das Bild des Detektorfensters erneut, wodurch
der Detektor wieder erneut ein symmetrisches glockenförmiges elektrisches Signal abgibt, welches mit $J_Z$
bezeichnet ist. Bei dem hier in Rede stehenden Gerät
überstreicht der Lichtfleck das Bild des Detektorfensters sowohl beim Hin- als auch beim Rückweg in der
gleichen Zeitdauer, so daß die beiden Glockenkurven
$J_H$ und $J_Z$ (siehe Diagramm I in Figur 2) gleiche Impulsbreiten aufweisen und auch sonst gleich sind.

Die glockenförmigen Impulse $J_H$ und $J_Z$ werden mit Hilfe
eines Schwellwertelements in rechteckförmige Impulse
entsprechender Breite umgewandelt. Diese Impulse gehen
aus dem Diagramm II in Figur 1 hervor und sind mit $J'_H$
bzw. $J'_Z$ bezeichnet. Die Breite eines jeden dieser
Impulse entspricht der Breite des darüberliegenden
Glockenimpulses $J_H$ bzw. $J_Z$ in Höhe der im Diagramm I
eingezeichneten Pegelspannung P.

Die Anstiegs- oder Vorderflanke eines jeden Impulses $J'_H$ bzw $J'_Z$ steuert ein Speicherelement , beispielsweise ein bistabiles Element, von dem zum Anfangszeitpunkt $t_B$ ein Ausgang von einer niedrigen Spannung l auf eine höhere Spannung h gesetzt worden ist. Die Anstiegsflanke des Impulses $J'_H$, die zu einem Zeitpunkt $t_{MH}$ erscheint, setzt den auf h liegenden Ausgang des bistabilen Elements auf die Spannung l zurück. Wenn dann zum Zeitpunkt $t_{MZ}$ die Anstiegsflanke des zweiten Impulses $J'_Z$ erscheint, so wird der auf l liegende Ausgang wieder auf h gesetzt. Auf diesem Zustand bleibt er, bis zum Zeitpunkt $t'_B$ bei dem er zurückgesetzt wird. Diese soeben geschilderten Verhältnisse sind in dem Diagramm III dargestellt. Die Länge des Impulses zwischen $t_B$ und $t_{MH}$ ist die Dauer H und die Länge des Impulses zwischen $t_{MZ}$ und $t'_B$ die Dauer Z.

Der gestrichelt eingezeichnete Fall in den Diagrammen der Figur 2 zeigt, daß die Summe M = H + Z unabhängig von den Impulsbreiten der Glockenimpulse $J_H$ und $J_Z$ ist. Diese Summe M ist aber bei dem in Rede stehenden Gerät die für die Abstandsbestimmung maßgebende Zeit. Diese ist somit unabhängig von beispielsweise der Höhe der symmetrischen Glockenimpulse $J_H$ und $J_Z$.

Nicht mehr konstant bleibt aber die Summe M, wenn die Glockenimpulse $J_H$ und $J_Z$ unsymmetrisch werden, d.h. verzerrt werden. Solche unsymmetrischen Glockenimpulse können beispielsweise entstehen, wenn die Intensitätsverteilung im Lichtfleck oder das Streuvermögen der Oberfläche 4 ungleichmäßig sind.

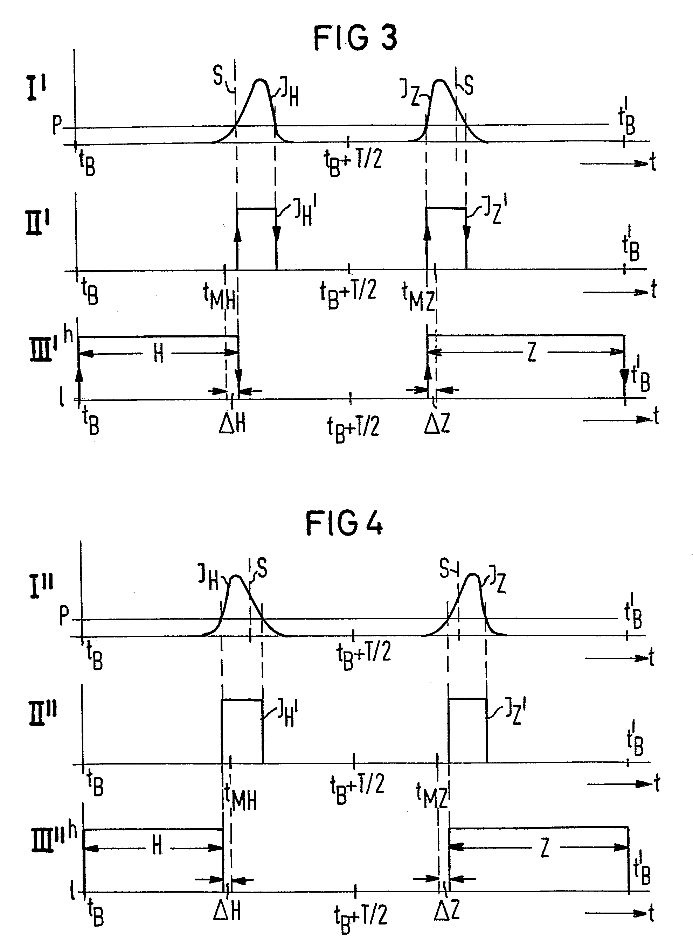

In den Figuren 3 und 4 sind solche unsymmetrischen glockenförmigen Impulse $J_H$ und $J_Z$ dargestellt und zwar in den Diagrammen I' bzw. I''. Im Diagramm I' der Figur 3 ist angenommen, daß der Scheitel des Glockenimpulses $J_H$ von der Symmetrelinie S aus nach rechts und im Diagramm I'' der Figur 4, daß der Scheitel des Glockenimpulses $J_H$ von der Symmetrielinie S aus nach links verlagert ist. Da der ausgelenkte Lichtstrahl 2 (siehe Figur 1) ab $t_B+T/2$ sich in entgegengesetzter Richtung bewegt, sind die Verhältnisse bei den Impulsen $J_Z$ genau umgekehrt. Im Diagramm I' der Figur 3 ist der Scheitel des Glockenimpulses $J_Z$ von der Symetrielinie S nach links und im Diagramm I'' der Figur 4 der Scheitel des Glockenimpulses $J_Z$ von der Symetrielinie S aus nach rechts verlagert.

In den Diagrammen II' und II'' der Figuren 3 bzw. 4 sind die auf den Glockenimpulsen $J_H$ und $J_Z$ mit Hilfe der Pegelspannung P geformten Rechteckimpulse $J'_H$ und $J'_Z$ dargestellt, und es ist zu sehen, daß die Anstiegsflanken dieser Impulse bezüglich den auf das Diagramm II in Figur 2 bezogenen Zeitpunkte $t_{MH}$ und $t_{MZ}$ ( Es sind die Zeitpunkte der Anstiegsflanken der durchgezogenen Rechteckimpulse in Fig. 2 gemeint) verschoben sind und zwar derart, daß für die Fig. 3 $H+Z > M$ (siehe Diagramm III' in Fig. 3) und für die Fig. 4 $H+Z < M$ (siehe Diagramm III'' in Fig. 4) gilt. Die Abweichung $\Delta M$ der Summe von M setzt sich jeweils zusammen aus einem Fehler $\Delta H$ und aus einem Fehler $\Delta Z$ (siehe Diagramme III' und III'' der Figuren 3 bzw. 4).

Zur Ermittlung des durch die Verzerrung eines Glockenimpulses $J_H$ bzw. $J_Z$ hervorgerufenen Fehler $\Delta M$ wird ein Glockenimpuls, beispielsweise der Glockenimpuls $J_H$ differenziert, die Impulsbreiten $m_H$ und $n_H$ des im differenzierten Signalanteil enthaltenen positiven bzw.

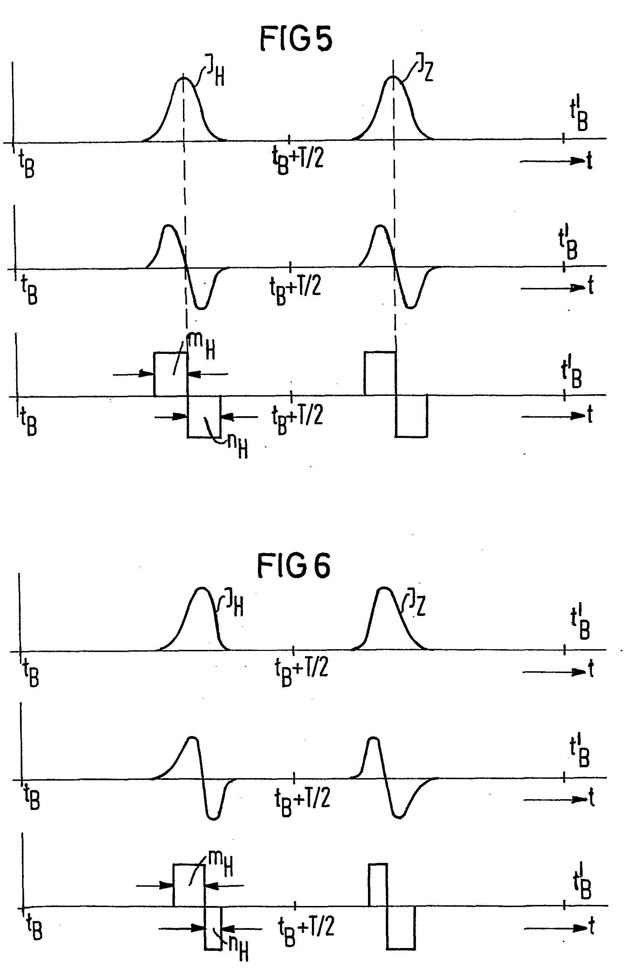

negativen Impulses werden gemessen und daraus ein Korrektursignal abgeleitet. In den Figuren 5 und 6 sind in den Diagrammen IV bzw. IV' symmetrische Glockenimpulse bzw. verzerrte Glockenimpulse dargestellt und in den Diagrammen V bzw. V' daraus abgeleitete differenzierte Signale. Die differenzierten Signale werden in impulsbreitentreue Rechtecksignale umgewandelt, die in den Diagrammen VI bzw. VI' der Figuren 3 und 4 dargestellt sind.

Für den Fehler $\Delta$ M gilt nun allgemein, daß er betragsmäßig gleich der Differenz zwischen der Impulsbreite des positiven und der Impulsbreite des negativen Impulses des differenzierten Signals ist. Dies gilt sogar dann noch, wenn ein elektrisches Signal aus dem Detektor 61 mehrere zur Mitte symmetrische Nebenmaxima aufweist. In diesem Falle ist der Fehler M betragsmäßig durch die Differenz aus der Summe der Impulsbreiten der positiven Impulse und aus der Summe der Impulsbreiten der negativen Impulse des differenzierten Signals gegeben. Die Differenz verschwindet in jedem Fall, wenn eine Symmetrie zu einer Symmetrielinie S gegeben ist.

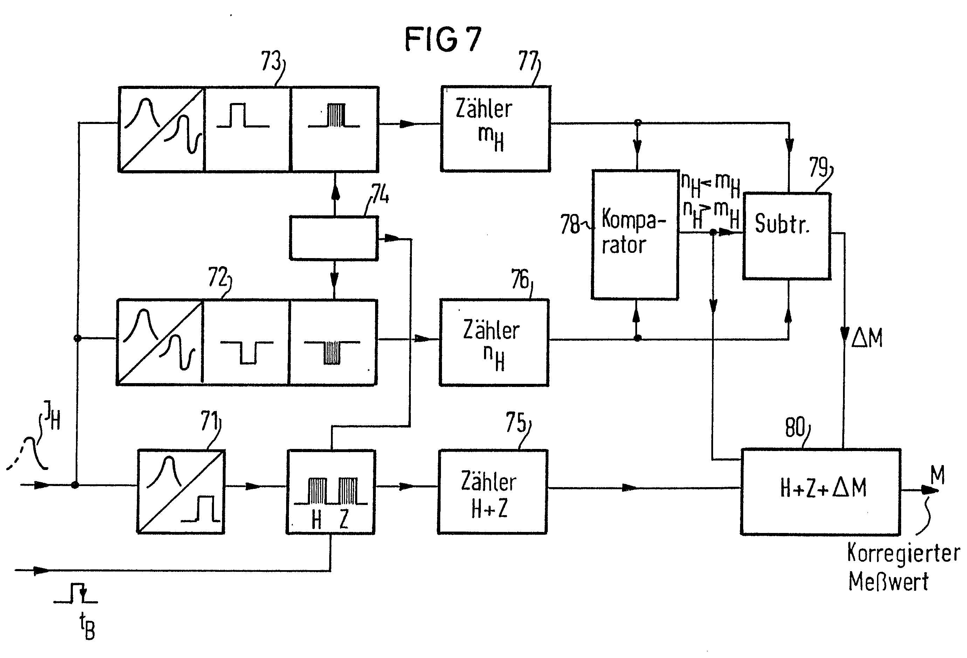

Die Korrektur des Meßfehlers kann in der vorstehend angegebenen Weise elektronisch durchgeführt werden. In der Fig. 7 ist ein Blockschaltbild einer elektronischen Schaltung zur Durchführung des Verfahrens dargestellt. Bei dieser Schaltung wird ein vom Detektor abgegebenes Signal $J_H$ einem Impulsformer 71 einem Differenzierglied 72 und einem Differenzierglied 73 zugeführt. Der Impulsformer 71 ist so ausgebildet, daß er an einem Ausgang die in den Diagrammen III, III' und III'' dargestellten Impulse abgibt. Wie diese Impulse mit Hilfe einer bistabilen Kippschaltung erzeugt werden können, ist bereits beschrieben worden. Die Differenzierglieder 72 und 73 formen das differenzierte Signal in impulsbreitentreue Rechteckimpulse um, wobei das Differenzierglied 72 den
positiven Impuls und das Differenzierglied 73 den negativen Impuls unterdrückt. Die Impulslängen der Impulse aus dem Impulsformer 71, der Negativimpuls aus dem
Differenzierglied 72 und der positive Impuls aus dem
Differenzierglied 73 werden mit Hilfe eines Taktgeber 74
digitalisiert. Dies kann auf einfache Weise so geschehen,
daß das Taktgebersignal zusammen mit dem entsprechenden
Impuls auf ein geeignetes Pol gegeben werden, an dessen
Ausgang Taktimpulse erscheinen, solange an Eingängen ein
Impuls und Taktimpuls gleichzeitig anliegen. Die Impulsbreite und der Abstand der Taktimpulse voneinander
muß klein im Vergleich zu den übrigen Impulsen sein.

Die digitalisierten Pulsbreiten werden von Zählern 75,
76 und 77 jeweils gezählt. Im Zähler 75 steht am Ende
einer jeden Zählung eine Zahl, die H+Z entspricht, im
Zähler 76 steht eine Zahl, die der Impulsbreite n des
oder der negativen Impulse entspricht und im Zähler 77
eine Zahl, die der Impulsbreite m des oder der positiven
Impulse im differenzierten Signal entspricht.

Ein Komperator 78 vergleicht, ob n kleiner oder größer
als m ist. Ein Subtraktionsglied 79 führt, gesteuert vom
Komperator, die richtige Subtraktion zwischen n und m
aus, und an einem Ausgang dieses Subtraktionsgliedes
wird der Fehler $\Delta$ M mit dem richtigen Vorzeichen aus
Korrektursignal abgegeben. Ein Addierglied 80 addiert
zu der Zahl aus dem Zähler 75 die Zahl $\Delta$ M hinzu, und an
einem Ausgang dieses Addiergliedes 80 erscheint das
korrigierte Meßsignal M.

<u>Patentansprüche</u>

1. Verfahren zum Korrigieren eines Meßsignals, das von einem berührungslos messenden Gerät erzeugt worden ist, welches eine zu vermessende Oberfläche mit einem Lichtstrahl abtastet, das von der Oberfläche zurückgestreute Licht mittels einer optoelektrischen Detektoreinrichtung mißt, und das Meßsignal in Abhängigkeit von einem oder mehreren vom Detektor abgegebenen elektrischen Signalen erzeugt, d a d u r c h   g e k e n n z e i c h n e t , daß das Meßsignal in Abhängigkeit von einer Verzerrung eines elektrischen Signals korrigiert wird.

2. Verfahren nach Anspruch 1, d a d u r c h   g e - k e n n z e i c h n e t , daß das Meßsignal mit einem gesondert erzeugten, von der Verzerrung des elektrischen Signals abhängigen Korrektursignal korrigiert wird.

3. Verfahren nach Anspruch 1 oder 2, d a d u r c h   g e k e n n z e i c h n e t , daß die Verzerrung des elektrischen Signals durch Differenzieren des Signals und durch Vergleich bestimmter vorhandener Impulse im differenzierten Signal festgestellt wird.

4. Verfahren nach Anspruch 3, d a d u r c h   g e - k e n n z e i c h n e t , daß die Verzerrung durch Vergleich der Impulsbreiten der bestimmten Impulse festgestellt wird.

5. Verfahren nach Anspruch 2 und 4, d a d u r c h   g e k e n n z e i c h n e t , daß das Korrektursignal in Abhängigkeit von einer Differenz der Impulsbreiten zweier bestimmter Impulse des differenzierten elektrischen Signals gebildet wird.

6. Verfahren nach Anspruch 5, bei welchem ein Meßsignal
in Abhängigkeit von dem zeitlichen Abstand zwischen zwei
aufeinanderfolgenden elektrischen Signalen gebildet wird,
d a d u r c h   g e k e n n z e i c h n e t , daß zur
Korrektur des Meßsignals die Zeitdifferenz korrigiert wird,
indem die Differenz der Impulsbreiten zu dieser Zeitdifferenz hinzugegeben wird.

## FIG 3

## FIG 4

## FIG 5

## FIG 6

# FIG 7

73

Zähler m_H — 77

74

Komparator — 78

$n_H < m_H$
$n_H > m_H$

Subtr. — 79

72

Zähler n_H — 76

71

$\overline{\phantom{i}}_H$

H  Z

Zähler H+Z — 75

H+Z+ΔM — 80

ΔM

M

Korregierter Meßwert

t_B

4/4

0049419

**Europäisches Patentamt**

## EUROPÄISCHER RECHERCHENBERICHT

| EINSCHLÄGIGE DOKUMENTE | | | KLASSIFIKATION DER ANMELDUNG (Int Cl.³) |
|---|---|---|---|
| Kategorie | Kennzeichnung des Dokuments mit Angabe, soweit erforderlich, der maßgeblichen Teile | betrifft Anspruch | G 01 S 17/46<br>G 01 B 11/02 |
| | <u>DE - A - 2 921 792</u> (THE MARCONI CO. LTD.)<br><br>* Einführung; Seite 8, Absatz 2 - Seite 9, Absatz 1; Seite 9, Absatz 3 - Seite 11, Absatz 4; Figuren 1,2 * | 1-3 | |

**RECHERCHIERTE SACHGEBIETE (Int Cl.³)**

```
G 01 B  11/00
        11/02
        11/06
G 01 D   5/246
         5/247
G 01 S  17/46
        17/08
         7/48
         7/32
G 01 R  29/027
G 04 F  13/02
```

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 20-01-1982 | VISSER |

EPA form 1503.1   06.78